(19) Europäisches Patentamt
European Patent Office
Office européen des brevets

(11) Publication number: **0 257 863 B1**

(12) **EUROPEAN PATENT SPECIFICATION**

(45) Date of publication of patent specification: **21.04.93**

(51) Int. Cl.⁵: **C03C 25/02**

(21) Application number: **87306921.5**

(22) Date of filing: **05.08.87**

# (54) Plastic cladding composition for silica or glass core optical fiber, and silica or glass core optical fiber prepared therefrom.

(30) Priority: **06.08.86 JP 183342/86**
**26.02.87 JP 41379/87**
**26.02.87 JP 41380/87**
**03.04.87 JP 82704/87**

(43) Date of publication of application:
**02.03.88 Bulletin 88/09**

(45) Publication of the grant of the patent:
**21.04.93 Bulletin 93/16**

(84) Designated Contracting States:
**DE FR GB NL**

(56) References cited:
**EP-A- 0 128 516**
**US-A- 4 511 209**

**CHEMICAL ABSTRACTS, vol. 106, no. 2, January 1987, page 225, abstract no. 8654u, Columbus, Ohio, US; & JP-A-61 111 943 (NITTO ELECTRIC INDUSTRIAL CO., LTD) 30-05-1986**

**CHEMICAL ABSTRACTS, vol. 105, no. 18, November 1986, page 301, abstract no. 157727b, Columbus, Ohio, US; & JP-A-61 86 448 (DAIKIN INDUSTRIES, LTD) 01-05-1986**

(73) Proprietor: **MITSUBISHI RAYON CO., LTD.**
**3-19, Kyobashi 2-chome Chuo-Ku**
**Tokyo 104(JP)**

(72) Inventor: **Yamamoto, Takashi**
**216-35, Oono-cho Saeki-gun**
**Hiroshima(JP)**
Inventor: **Shimada, Katsuhiko**
**2-6, Kurokawa**
**Ootake-shi Hiroshima(JP)**
Inventor: **Matsumoto, Tsuruyoshi**
**3-2, Kurokawa**
**Ootake-shi Hiroshima(JP)**
Inventor: **Murata, Ryuji**
**3-8-14, Showa-cho**
**Iwakuni-shi Yamaguchi(JP)**

(74) Representative: **Stuart, Ian Alexander et al**
**MEWBURN ELLIS & CO. 2/3 Cursitor Street**
**London EC4A 1BO (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).



Rank Xerox (UK) Business Services
(3.10/3.5x/3.0.1)

## Description

The present invention relates to a plastic cladding composition for a silica or glass core optical fiber, and further, to a silica or glass core optical fiber prepared from this cladding composition.

A quartz glass core optical fiber has been used in the field of long-distance communication, and means for utilizing this quartz glass core optical fiber in other fields, for example, the field of short-to-medium distance communication, is row being examined.

The quartz glass core has an excellent heat resistance over a plastic core. However, the quartz glass core optical fiber has a problem in that it is difficult to impart light transmitting characteristics to the quartz glass core optical fiber and the product is therefore expensive, and since the toughness is low, the quartz glass core optical fiber is readily broken. Means for improving the toughness of the quartz glass core optical fiber has been examined. For example, Japanese Unexamined Patent Publication No. 58-223638 proposes a quartz fiber having a protecting layer formed of a radiation-curable coating composition. This method for preparing a quartz glass core optical fiber is simpler than the heretofore developed methods, and the obtained optical fiber has an improved toughness. However, since the quartz glass optical fiber exerting a function of showing the light transmission capacity is formed by the conventional process, the product is very expensive. Accordingly, development of a method for preparing at a low manufacturing cost a quartz glass optical fiber usable as an optical fiber for medium-distance communication or short-distance communication is eagerly desired.

U.S. Patent No. 4,511,209 discloses a cladding composition for plastic clad silica core optical fibers, which comprises a highly fluorinated monofunctional acrylate, a polyfunctional acrylate being trifunctional or higher serving as a crosslinking agent, a monofunctional or trifunctional thiol functioning as a synergist, and a photoinitiator. In order to maintain a good pliability in the formed polymer cladding, the highly fluorinated monofunctional acrylate of the cladding composition has an alkyl radical substituted with at least 12 fluorine atoms, and a specific thiol compound such as $\gamma$-mercaptopropyltrimethoxysilane is used as the synergist.

According to this known technique, a plastic clad silica core optical fiber can be prepared by simplified steps. However, the compatibility of the cladding composition with the crosslinkable polyfunctional acrylate is poor and, therefore, the plastic cladding often becomes turbid and it is difficult to obtain a plastic clad silica core optical fiber having excellent light transmission characteristics.

It is a primary object of the present invention to provide a core-clad type silica fiber having excellent light transmission characteristics, which comprises a fused silica core and an ultraviolet ray-cured cladding composition.

Another object of the present invention is to provide an ultraviolet-ray cured cladding composition in which the content of a highly fluorinated monofunctional acrylate or $\alpha$-fluoroacrylate, which is expensive, is reduced and the compatibility with a crosslinkable polyfunctional acrylate is improved to impart a high transparency.

In accordance with the present invention, there is provided a cladding composition for a plastic clad silica or glass core optical fiber having a silica or glass core with a refractive index $n_1$, which comprises (A) a fluorinated monofunctional acrylate or $\alpha$-fluoroacrylate composition comprising a highly fluorinated monofunctional acrylate or $\alpha$-fluoroacrylate represented by the following formula (I):

$$CH_2{=}\overset{\displaystyle Y}{\overset{|}{C}}{-}COO(CH_2)_{\underline{\ell}}(CF_2)_{\underline{n}}X \qquad (I)$$

wherein Y represents H or F, X represents H or F, $\underline{\ell}$ is an integer of from 1 to 12 and $\underline{n}$ is an integer of from 5 to 12, preferably 7 to 10,

and a lowly fluorinated monofunctional acrylate or $\alpha$-fluoroacrylate represented by the following formula (I):

$$CH_2{=}\overset{\displaystyle Y}{\overset{|}{C}}{-}COOCH_2(CF_2)_{\underline{m}}X \qquad (II)$$

wherein X and Y are as defined above, and $\underline{m}$ is an integer of from 1 to 3, preferably 1 or 2,

at a weight ratio of from 1/99 to 60/40, (B) a polyfunctional acrylate or $\alpha$-fluoroacrylate having at least two acryloyl or $\alpha$-fluoroacryloyl radicals in the molecule, (C) a photoinitiator, and if necessary, (D) at least one

stabilizer selected from the group consisting of thiodicarboxylic acid diesters and hindered phenols, the refractive index $n_2$ of a cured product of said cladding composition satisfying preferably a requirement of $(n_1 - n_2) \geqq 0.01$.

In accordance with another aspect of the present invention, there is provided a plastic clad silica or glass core optical fiber comprising a silica or glass core with a refractive index $n_1$ and an ultraviolet ray-cured cladding composition with a refractive index $n_2$ , wherein the cladding composition comprises (A) a fluorinated monofunctional acrylate or $\alpha$-fluoroacrylate composition comprising a highly fluorinated monofunctional acrylate or $\alpha$-fluoroacrylate represented by the following formula (I):

$$CH_2=\overset{\displaystyle Y}{\overset{|}{C}}-COO(CH_2)_{\underline{\ell}}(CF_2)_{\underline{n}}X \qquad (I)$$

wherein Y represents H or F, X represents H or F, $\underline{\ell}$ is an integer of from 1 to 12 and $\underline{n}$ is an integer of from 5 to 12,
and a lowly fluorinated monofunctional acrylate or $\alpha$-fluoroacrylate represented by the following formula (I):

$$CH_2=\overset{\displaystyle Y}{\overset{|}{C}}-COOCH_2(CF_2)_{\underline{m}}X \qquad (II)$$

wherein X and Y are as defined above, and $\underline{m}$ is an integer of from 1 to 3,
at a weight ratio of from 1/99 to 60/40, (B) a polyfunctional acrylate or $\alpha$-fluoroacrylate having at least two acryloyl or $\alpha$-fluoroacryloyl radicals in the molecule, (C) a photoinitiator, and if necessary, (D) at least one stabilizer selected from the group consisting of thiodicarboxylic acid diesters and hindered phenols, the refractive index $n_2$ of a cured product of said cladding composition satisfying preferably a requirement of $(n_1 - n_2) \geq 0.01$.

As the highly fluorinated monofunctional acrylate or $\alpha$-fluoroacrylate of the formula (I) used in carrying out the present invention, there can be mentioned acrylates and $\alpha$-fluoroacrylates having a fluoroalkyl radical selected from 1,1,2,2-tetrahydroperfluorododecyl, 1,1,2,2-tetrahydroperfluorodecyl, trihydroperfluoroheptyl, trihydroperfluoroundecyl, perfluorodecyl, $-C_8F_{17}$ $-C_{10}F_{21}$ and $-C_{12}F_{25}$ radicals.

As the lowly fluorinated monofunctional acrylate represented by the formula (II), there can be mentioned acrylates and $\alpha$-fluoroacrylates having a fluoroalkyl radical selected from 2,2,3,3-tetrafluoropropyl, trifluoroethyl, 2,2,3,3,3-pentafluoropropyl, 1-trifluoromethyl-2,2,2-trifluoroethyl, 1-trifluoromethyl-1,2,2,2-tetrafluoroethyl, 2,2,3,4,4,4-hexafluorobutyl, 1-methyl-2,2,3,4,4,4-hexafluorobutyl, 1,1-dimethyl-2,2,3,3-tetrafluoropropyl and 1,1-dimethyl-2,2,3,4,4,4-hexafluorobutyl radicals.

Since the cladding composition of the present invention comprises the fluorine-containing monomers represented by the general formulae (I) and (II) in combination, the cladding composition is valuable for forming a plastic clad silica core optical fiber which has a high pliability, a high toughness, a high heat resistance, and a highly improved compatibility with the polyfunctional acrylate or $\alpha$-fluoroacrylate.

For preparing a plastic clad silica core optical fiber capable of attaining the objects of the present invention, a fluorinated monofunctional acrylate or $\alpha$-fluoroacrylate composition comprising the highly fluorinated monofunctional acrylate or $\alpha$-fluoroacrylate of the formula (I) and the lowly fluorinated monofunctional acrylate or $\alpha$-fluoroacrylate of the formula (II) at a weight ratio of from 1/99 to 60/40, preferably from 5/95 to 50/50, is incorporated in the cladding composition preferably in an amount of 50 to 98% by weight. Namely, the cladding polymer prepared from a cladding composition comprising a fluoromonofunctional acrylate or $\alpha$-fluoroacrylate mixture in which the ratio of the acrylate or $\alpha$-fluoroacrylate represented by the formula (I) to the acrylate or $\alpha$-fluoroacrylate represented by the formula (II) is smaller than 1/99 is hard and has a poor softness, and the refractive index tends to increase. In addition, a plastic clad silica core optical fiber having a large numerical aperture is difficult to obtain. When a fluoro-monofunctional acrylate mixture in which the above-mentioned ratio is larger than 60/40 is used, the compatibility with the polyfunctional acrylate or $\alpha$-fluoroacrylate and photoinitiator constituting the cladding composition of the present invention is degraded, and the formed cladding polymer is opaque and has a poor toughness.

When the cladding composition of the present invention comprises 50 to 98% by weight of the monofunctional acrylate or $\alpha$-fluoroacrylate mixture comprising the acrylate or $\alpha$-fluoroacrylate of the formula (I) and the acrylate or $\alpha$-fluoroacrylate of the formula (II) at a weight ratio of from 1/99 to 60/40,

preferably from 5/95 to 50/50, the polymer cladding prepared from the cladding composition of the present invention has a high transparency, a high toughness and a high pliability in combination. The highly fluorinated acrylate or α-fluoroacrylate of the formula (I) as the cladding agent exhibits a poor compatibility with other cladding agents, and a cladding composition comprising this highly fluorinated acrylate or α-fluoroacrylate alone and a polymer cladding formed from this cladding composition tend to become opaque. Therefore, in this case, the ingredients of the cladding composition capable of providing a plastic clad silica core optical fiber are restricted. In contrast, since the cladding composition of the present invention comprises the lowly fluorinated monofunctional acrylate or α-fluoroacrylate of the formula (II) in addition to the highly fluorinated monofunctional acrylate or α-fluoroacrylate of the formula (I), the compatibility with other cladding agents is highly improved, and the polymer cladding prepared from this cladding composition is excellent in the transparency. Therefore, a polymer clad silica core optical fiber having an attenuation smaller than 10 dB/km and being capable of sufficiently transmitting light along 1 to 2 km can be easily obtained.

In order to improve the heat resistance and chemical resistance of the plastic clad plastic core optical fiber of the present invention, a polyfunctional acrylate or α-fluoroacrylate having at least two acryloyl or α-fluoroacryloyl radicals in the molecule is incorporated in the cladding composition. As the polyfunctional acrylate or α-fluoroacrylate, preferably a polyfunctional acrylate or α-fluoroacrylate represented by the following formula (V):

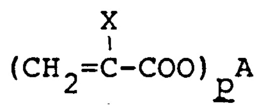

(V)

wherein X represents H or F, A represents for a group formed by removing at least 2 hydroxyl groups from a polyol compound, and p is an integer of at least 2,
is incorporated in an amount of 1 to 20% by weight into the cladding composition.

As specific examples of the group A in the formula (V), the following groups can be mentioned:

$-(CH_2)_q-$ , 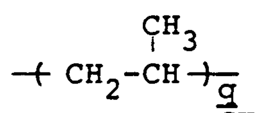 ,

$-(CH_2CH_2O)_q-$ , 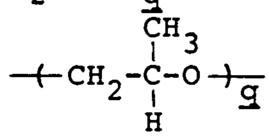 ,

$-C_2H_4-(CF_2)_4-C_2H_4-$, 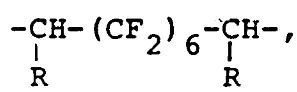,

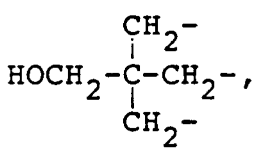, 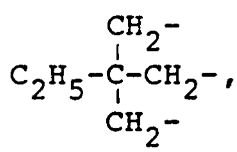, 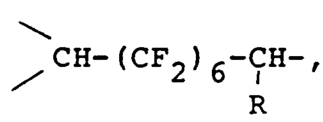,

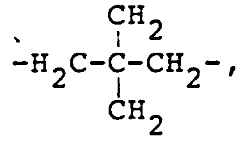, 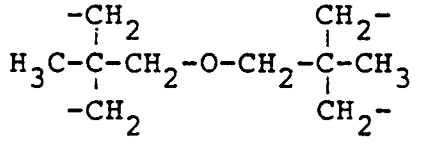 ,

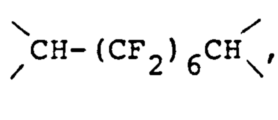, 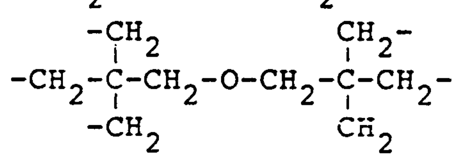 and

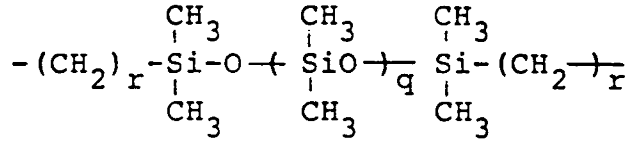 ,

wherein $\underline{q}$ is an integer of 1 to 1000 and r is an integer of 3 to 10.

Preferably, the polyfunctional acrylate or α-fluoroacrylate is contained in an amount of 1 to 20% by weight in the cladding composition of the present invention. The compatibility of the polyfunctional acrylate or α-fluoroacrylate with other components of the cladding composition is not so good. Accordingly, a cladding composition containing a large amount of the polyfunctional acrylate or α-fluoroacrylate has a poor transparency. When the cladding composition of the present invention contains the polyfunctional acrylate or α-fluoroacrylate in an amount of 1 to 20% by weight, the cladding composition exhibits an excellent transparency, and the plastic cladding formed from this cladding composition has excellent heat resistance, moisture resistance and stress resistance. Accordingly, a plastic clad silica or glass core optical fiber provided with this polymer cladding has excellent characteristics.

In order to improve the adhesion of the polymer cladding to the silica or glass core, preferably, a chemical compound represented by the following formula:

$$CH_2=\overset{H}{\overset{|}{C}}-COO(CH_2)_{\underline{d}}OH$$

wherein $\underline{d}$ is an integer of from 1 to 8,

or

$$CH_2=\overset{H}{\overset{|}{C}}-COO(CH_2)_{\underline{d}}OOC(CH_2)_{\underline{f}}COOH$$

wherein $\underline{d}$ and $\underline{f}$ are integers of from 1 to 8, is incorporated in an amount of 0.5 to 10% by weight in the cladding composition of the present invention.

As specific examples of the photoinitiator to be incorporated in the cladding composition of the present invention, there can be mentioned benzoin, benzoin alkyl ethers, 2-methylbenzoin, benzophenone, Michler's ketone, benzyl, benzyldimethylketal, anthraquinone, methylanthraquinone, diacetyl, acetophenone, diphenyl sulfide and anthracene. It is preferably the photoinitiator is incorporated in the cladding composition in an amount of 0.1 to 10% by weight.

Furthermore, in order to improve the heat resistance and light resistance of the polymer cladding, preferably a thiodicarboxylic acid ester or hindered phenol is incorporated as a stabilizer in an amount of 0.01 to 5% by weight into the cladding composition of the present invention.

For example, there can be mentioned hindered phenols such as 2,6-di-t-butyl-4-methylphenol, 2,2′-methylenebis(4-methyl-6-t-butylphenol), 4,4′-thiobis(6-t-butyl-3-methylphenol), 4,4′-butylidene-bis(3-methyl-6-t-butylphenol), 1,3,5-trimethyl-2,4,6-tris(3,5-di-t-butyl-4-hydroxybenzyl)benzene, 1,3,5-tris(2-methyl-4-hydroxy-5-t-butylphenol)butane, octadecyl-3-(3,5-di-t-butyl-4-hydroxyphenyl)propionate, triethylene glycol-bis[3-(3-t-butyl-5-methyl-4-hydroxyphenyl)propionate] and 1,6-hexanediol-bis [3-(3,5-di-t-butyl-4-hydroxyphenyl)propionate], and thiodicarboxylic acid esters such as dilauryl thiodipropionate and distearyl thiodipropionate. These thiodicarboxylic acid esters and hindered phenols may be used either alone or in combination.

The plastic clad silica or glass core optical fiber of the present invention has enhanced heat resistance, bending resistance, stress resistance and light resistance as compared with the conventional optical fibers of the same type. Furthermore, since the cladding composition of the present invention can be cured in a short time under irradiation with ultraviolet rays, a plastic clad silica or glass core optical fiber can be prepared at a higher production rate than in the conventional techniques.

The present invention will now be described in detail with reference to the following examples.

## Example 1

A cladding composition of Run No. 1 shown in Table 1 was flow-coated to a thickness of 100 μm on a glass sheet and the film was irradiated with ultraviolet rays by a high-pressure mercury lamp having an output of 80 W/cm for 1 second in an inert atmosphere to obtain a crosslinked cured film. The physical properties of the cured film are shown in Table 1.

A fiber core formed of quartz, which had an outer diameter of 200 µm, was spun at a drawing speed of 60 m/min. Then, the cladding composition of Run No. 1 shown in Table 1 was coated on the surface of the fiber core and the coated fiber was irradiated with ultraviolet rays by a high-pressure mercury lamp having an output of 80 W/cm to form a plastic clad silica core optical fiber having a cladding thickness of 5 µm. The attenuation of the optical fiber was small and 7.5 dB/km at 850 nm. When the optical fiber was heat-treated at 130 °C for 300 hours, the light transmittance was changed only to a negligible extent.

Examples 2 through 6

Cured films were prepared by using cladding compositions shown in Table 1 in the same manner as described in Example 1. The refractive indexes of the cured films are shown in Table 1. Each cured film was transparent and pliable.

In the same manner as described in Example 1, cladding compositions were coated on the surfaces of quartz fibers, and when the light transmittance and heat resistance of each of the so-obtained plastic clad silica core optical fibers were evaluated, it was found that the light transmittance of each fiber was as good as that of the optical fiber obtained in Example 1 and the heat resistance was excellent.

Table 1

| Example No. | Cladding composition | (weight %) | Transparency of composition | Transparency of cured product | Refractive index of cured product | Attenuation at 850 nm (dB/km) Start | After treatment at 130°C for 300 hours |
|---|---|---|---|---|---|---|---|
| 1 | $CH_2=CHCOOCH_2C_2F_5$ | 66 | Transparent | Transparent | 1.388 | 7.5 | 8.2 |
| | $CH_2=CHCOO(CH_2)_2C_8F_{17}$ | 26 | | | | | |
| | $CH_2=CHCOO(CH_2)_4OCOCH=CH_2$ | 5 | | | | | |
| | Benzyldimethylketal | 3 | | | | | |
| 2 | $CH_2=CHCOOCH_2CF_3$ | 70 | Transparent | Transparent | 1.414 | 8.2 | 9.1 |
| | $CH_2=CHCOO(CH_2)_2C_6F_{13}$ | 4.5 | | | | | |
| | $CH_2=CHCOO(CH_2)_2C_8F_{17}$ | 6 | | | | | |
| | $CH_2=CHCOO(CH_2)_2C_{10}F_{21}$ | 4.5 | | | | | |
| | $CH_2=CHCOO(CH_2CH_2O)_4COCH=CH_2$ | 10 | | | | | |
| | Benzyldimethylketal | 5 | | | | | |
| 3 | $CH_2=CHCOOCH_2(CF_2)_2H$ | 31 | Transparent | Transparent | 1.415 | 6.8 | 7.7 |
| | $CH_2=CHCOOCH_2CF_3$ | 53 | | | | | |
| | $CH_2=CHCOO(CH_2)_2C_8F_{17}$ | 9 | | | | | |
| | $(CH_2=CHCOOCH_2)_3CCH_2CH_3$ | 5 | | | | | |
| | 1-Hydroxycyclohexyl phenyl ketone | 2 | | | | | |

Table 1 (Continued)

| Example No. | Cladding composition | (weight %) | Transparency of composition | Transparency of cured product | Refractive index of cured product | Attenuation at 650 nm (dB/km) | |
|---|---|---|---|---|---|---|---|
| | | | | | | Start | After treatment at 100°C for 300 hours |
| 4 | $CH_2=CHCOOCH_2CF_3$ | 73 | Transparent | Transparent | 1.421 | 8.8 | 9.5 |
| | $CH_2=CHCOO(CH_2)_2C_8F_{17}$ | 10 | | | | | |
| | $CH_2=CHCOOCH_2CH_2OH$ | 8 | | | | | |
| | $-\!\!(CH_2=CHCOOCH_2-)_4C$ | 7 | | | | | |
| | 1-Hydroxycyclohexyl phenyl ketone | 2 | | | | | |
| 5 | $CH_2=CFCOOCH_2C_2F_5$ | 78 | Transparent | Transparent | 1.388 | 6.6 | 7.5 |
| | $CH_2=CHCOO(CH_2)_2C_8F_{17}$ | 5 | | | | | |
| | $CH_2=CHCOO(CH_2)_6OCOCH=CH_2$ | 14 | | | | | |
| | 1-Hydroxycyclohexyl phenyl ketone | 3 | | | | | |
| 6 | $CH_2=CFCOOCH_2CF_3$ | 82 | Transparent | Transparent | 1.397 | 8.1 | 8.9 |
| | $CH_2=CFCOOCH_3$ | 4 | | | | | |
| | $CH_2=CFCOO(CH_2)_2C_8F_{17}$ | 5 | | | | | |
| | $CH_2=CHCOOCH_2C(CH_3)_2CH_2OCOCH=CH_2$ | 7 | | | | | |
| | 1-Hydroxycyclohexyl phenyl ketone | 2 | | | | | |

Comparative Examples 1 through 3

The procedures of Example 1 were repeated in the same manner by using cladding compositions shown in Table 2. Each of these compositions was opaque and the cured product was turbid.

Optical fibers were prepared in the same manner as described in Example 1 by coating these light-curable cladding compositions on quartz fibers. The light transmittance of each optical fiber was poor and the attenuation exceeded 100 dB/km at 850 nm.

Table 2

| Comparative Example No. | Cladding composition | (weight %) | Transparency of composition | Transparency of cured product | Refractive index of cured product | Attenuation at 850 nm (dB/km) |
|---|---|---|---|---|---|---|
| 1 | $CH_2=CHCOO(CH_2)_2C_{10}F_{21}$ | 88 | Opaque | Turbid | *1 | > 100 |
| | $(CH_2=CHCOOCH_2)_3CCH_2CH_3$ | 10 | | | | |
| | Benzyldimethylketal | 2 | | | | |
| 2 | $CH_2=CHCOOCH_2CF_3$ | 28 | Opaque | Turbid | *1 | > 100 |
| | $CH_2=CHCOO(CH_2)_2C_{10}F_{21}$ | 60 | | | | |
| | $(CH_2=CHCOOCH_2)_4C$ | 8 | | | | |
| | Benzyldimethylketal | 4 | | | | |
| 3 | $CH_2=CHCOO(CH_2)_2C_8F_{17}$ | 76 | Opaque | Turbid | *1 | > 100 |
| | $CH_2=CHCOOCH_2CH_2OH$ | 5 | | | | |
| | $(CH_2=CHCOOCH_2)_3CCH_2CH_3$ | 14 | | | | |
| | Benzyldimethylketal | 5 | | | | |

*1 Refractive index was not measured because the cured compositions were turbid

<u>Examples 7 through 12</u>

A cured film was prepared in the same manner as described in Example 1 except that a stabilizer shown in Table 3 was added to the light-curable composition of Example 1 shown in Table 1. Each cured film was transparent, did not discolor and kept pliable even after heat-treatment at 150 °C for 300 hours.

Separately, in the same manner as described in Example 1, a quartz fiber was coated with the above-mentioned stabilizer-incorporated cladding composition to obtain a plastic clad silica core optical fiber. The light transmittance and heat resistance were evaluated. The obtained results are shown in Table 3. It can be seen from these results that the attenuation was small and the heat resistance was improved.

Table 3

| Example No. | Stabilizer | (weight parts)* | Attenuation at 820 nm (dB/km) Start | After treatment at 150°C for 300 hours |
|---|---|---|---|---|
| 7 | 4,4'-Thiobis(3-methyl-6-t-butylphenol) | 0.5 | 7.5 | 9.5 |
| 8 | 3,6-Di-t-butyl-4-methylphenol | 0.5 | 7.5 | 9.8 |
| 9 | 1,6-Hexanediol-bis[3-(3,5-di-t-butyl-4-hydroxyphenyl)propionate] | 0.5 | 7.8 | 9.2 |
| 10 | 2,2'-Methylenebis(4-methyl-6-t-butylphenol) | 0.25 | 8.0 | 8.8 |
| | Dilauryl thiodipropionate | 0.5 | | |
| 11 | Triethylene glycol-bis-3-(3-t-butyl-4-hydroxy-5-methylphenyl)propionate | 0.25 | 8.0 | 8.6 |
| | Dilauryl thiodipropionate | 0.5 | | |
| 12 | Octadecyl-3-(3,5-di-t-butyl-4-hydroxyphenyl)propionate | 0.5 | 7.9 | 9.0 |
| | Dilauryl thiodipropionate | 0.25 | | |

* Weight parts per 100 weight parts of the light-curable composition of Example 1

## Claims

**1.** A cladding composition for a plastic clad silica or glass core optical fiber, characterized in that the cladding composition comprises (A) a fluorinated monofunctional acrylate or α-fluoroacrylate composition comprising a highly fluorinated monofunctional acrylate or α-fluoroacrylate represented by the following formula (I):

$$CH_2{=}\overset{\displaystyle Y}{\overset{|}{C}}{-}COO(CH_2)_{\underline{\ell}}(CF_2)_{\underline{n}}X \qquad (I)$$

wherein Y represents H or F, X represents H or F, $\underline{\ell}$ is an integer of from 1 to 12 and $\underline{n}$ is an

integer of from 5 to 12,
and a lowly fluorinated monofunctional acrylate or α-fluoroacrylate represented by the following formula (II):

$$CH_2=\overset{Y}{\overset{|}{C}}-COOCH_2(CF_2)_{\underline{m}}X \qquad (II)$$

wherein X and Y are as defined above, and m is an integer of from 1 to 3,
at a weight ratio of from 1/99 to 60/40, (B) a polyfunctional acrylate or α-fluoroacrylate having at least two acryloyl or α-fluoroacryloyl radicals in the molecule and (C) a photoinitiator.

**2.** A cladding composition as set forth in claim 1, which comprises 50 to 98% by weight of the fluorinated monofunctional acrylate or α-fluoroacrylate composition, 1 to 20% by weight of the polyfunctional acrylate or α-fluoroacrylate (B) and 0.1 to 10% by weight of the photoinitiator (C).

**3.** A cladding composition as set forth in claim 1 or 2, wherein the fluorinated monofunctional acrylate or α-fluoroacrylate composition comprises a highly fluorinated monofunctional acrylate or α-fluoroacrylate of the formula (I) in which n is an integer of from 7 to 10 and a lowly fluorinated monofunctional acrylate or α-fluoroacrylate of the formula (II) in which m is 1 or 2.

**4.** A cladding composition as set forth in any of claims 1 to 3, which further comprises at least one stabilizer selected from the group consisting of thiodicarboxylic acid diesters and hindered phenols.

**5.** A cladding composition as set forth in any of claims 1, 2, 3 or 4, wherein the fluorinated monofunctional acrylate or α-fluoroacrylate composition comprises a highly fluorinated monofunctional α-fluoroacrylate of the formula (I) in which n is an integer of from 7 to 10 and X is F, and a lowly fluorinated monofunctional α-fluoroacrylate of the formula (II) in which m is 1 or 2 and X is F.

**6.** A cladding composition as set forth in any of claims 1 to 5, wherein the polyfunctional acrylate is an alkylene glycol diacrylate.

**7.** A cladding composition as set forth in claim 8, wherein the alkylene glycol diacrylate is hexaethylene glycol diacrylate.

**8.** A cladding composition as set forth in claim 4, wherein the stabilizer is dilauryl thiodipropionate.

**9.** A plastic clad silica core optical fiber comprising a fused silica core and an ultraviolet ray-cured cladding composition, characterized in that said ultraviolet ray-cured cladding composition is a cured product of a cladding composition comprising (A) a fluorinated monofunctional acrylate or α-fluoroacrylate composition comprising a highly fluorinated monofunctional acrylate or α-fluoroacrylate represented by the following formula (I):

$$CH_2=\overset{Y}{\overset{|}{C}}-COO(CH_2)_{\underline{\ell}}(CF_2)_{\underline{n}}X \qquad (I)$$

wherein Y represents H or F, X represents H or F, ℓ is an integer of from 1 to 12 and n is an integer of from 5 to 12,
and a lowly fluorinated monofunctional acrylate or α-fluoroacrylate represented by the following formula (II):

$$CH_2=\overset{Y}{\overset{|}{C}}-COOCH_2(CF_2)_{\underline{m}}X \qquad (II)$$

wherein X and Y are as defined above, and m is an integer of from 1 to 3, at a weight ratio of from 1/99 to 60/40, (B) a polyfunctional acrylate or α-fluoroacrylate having at least two acryloyl or α-fluoroacryloyl radicals in the molecule, and (C) a photoinitiator.

**10.** A plastic clad silica or glass core optical fiber as set forth in claim 9, which further comprises at least one stabilizer selected from the group consisting of thiodicarboxylic acid diesters and hindered phenols.

**11.** A plastic clad silica or glass core fiber as set forth in claim 10, wherein the stabilizer is dilauryl thiodipropionate.

**Patentansprüche**

**1.** Umhüllungszusammensetzung für eine optische Faser mit einer Kunststoffumhüllung und einem Silica- oder Glaskern, **dadurch gekennzeichnet**, daß die Umhüllungszusammensetzung (A) ein fluoriertes monofunktionelles Acrylat oder eine α-Fluoracrylatzusammensetzung, umfassend ein hochfluoriertes monofunktionelles Acrylat oder α-Fluoracrylat der folgenden Formel (I)

$$CH_2=\overset{Y}{\overset{|}{C}}-COO(CH_2)_{\underline{l}}(CF_2)_{\underline{n}}X \qquad (I)$$

worin Y H oder F, X H oder F, l eine ganze Zahl von 1 bis 12 und n eine ganze Zahl von 5 bis 12 bedeuten,
und ein niederfluoriertes monofunktionelles Acrylat oder α-Fluoracrylatder folgenden Formel (II)

$$CH_2=\overset{Y}{\overset{|}{C}}-COOCH_2(CF_2)_{m}X \qquad (II)$$

worin X und Y wie oben definiert sind und meine ganze Zahl von 1 bis 3 bedeutet, in einem Gewichtsverhältnis 1/99 bis 60/40, (B) ein polyfunktionelles Acrylat oder α-Fluoracrylat mit mindestens zwei Acryloyl- oder α-Fluoracryloylresten im Molekül und (C) einen Photoinitiator umfaßt.

**2.** Umhüllungszusammensetzung nach Anspruch 1, umfassend 50 bis 98 Gew.% des fluorierten monofunktionellen Acrylats oder der α-Fluoracrylatzusammensetzung, 1 bis 20 Gew.% des polyfunktionellen Acrylats oder α-Fluoracrylats (B) und 0,1 bis 10 Gew.% des Photoinitiators (C).

**3.** Unhüllungszusammensetzung nach Anspruch 1 oder 2, wobei das fluorierte monofunktionelle Acrylat oder die α-Fluoracrylatzusammensetzung ein hochfluoriertes monofunktionelles Acrylat oder α-Fluoracrylat der Formel (I), worin n eine ganze Zahl von 7 bis 10 ist, und ein niederfluoriertes monofunktionelles Acrylat oder α-Fluoracrylat der Formel (II), worin m 1 oder 2 ist, umfaßt.

**4.** Umhüllungszusammensetzung nach mindestens einem der Ansprüche 1 bis 3, umfassend weiterhin mindestens einen Stabilisator, welcher aus der aus Thiodicarbonsäurediestern und gehinderten Phenolen bestehenden Gruppe gewählt ist.

**5.** Umhüllungszusammensetzung nach mindestens einem der Ansprüche 1, 2, 3 oder 4, wobei das fluorierte monofunktionelle Acrylat oder die α-Fluoracrylatzusammensetzung ein hochfluoriertes monofunktionelles α-Fluoracrylat der Formel (I), worin n eine ganze Zahl von 7 bis 10 und X F bedeuten, und ein niederfluoriertes monofunktionelles α-Fluoracrylat der Formel (II), worin m 1 oder 2 und X F bedeuten, umfaßt.

**6.** Umhüllungszusammensetzung nach mindestens einem der Ansprüche 1 bis 5, wobei das polyfunktionelle Acrylat ein Alkylenglykoldiacrylat ist.

**7.** Umhüllungszusammensetzung nach Anspruch 8, wobei das Alkylenglykoldiacrylat Hexaethylenglykoldiacrylat ist.

**8.** Umhüllungszusammensetzung nach Anspruch 4, wobei der Stabilisator Dilaurylthiodipropionat ist.

**9.** Optische Faser mit einer Kunststoffumhüllung und einem Silicakern, umfassend einen Quarzglaskern und eine durch Ultraviolettstrahlen gehärtete Umhüllungszusammensetzung, **dadurch gekennzeichnet**, daß die Ultraviolettstrahlen gehärtete Umhüllungszusammensetzung ein gehärtetes Produkt einer Umhüllungszusammensetzung ist, umfassend (A) ein fluoriertes monofunktionelles Acrylat oder eine α-Fluoracrylatzusammensetzung, umfassend ein hochfluoriertes monofunktionelles Acrylat oder α-Fluoracrylat der folgenden Formel (I)

$$CH_2{=}\overset{\overset{\large Y}{|}}{C}{-}COO(CH_2)_{\underline{\ell}}(CF_2)_{\underline{n}}X \qquad (I)$$

worin Y H oder F, X H oder F, l eine ganze Zahl von 1 bis 12 und n eine ganze Zahl von 5 bis 12 bedeuten,
und ein niederfluoriertes monofunktionelles Acrylat oder α-Fluoracrylatder folgenden Formel (II)

$$CH_2{=}\overset{\overset{\large Y}{|}}{C}{-}COOCH_2(CF_2)_{\underline{m}}X \qquad (II)$$

worin X und Y wie oben definiert sind und m eine ganze Zahl von 1 bis 3 ist, in einem Gewichtsverhältnis von 1/99 bis 60/40, (B) ein polyfunktionelles Acrylat oder α-Fluoracrylat mit mindestens zwei Acryloyl- oder α-Fluoracryloylresten im Molekül und (C) einen Photoinitiator.

**10.** Optische Faser mit einer Kunststoffumhüllung und einem Silica- oder Glaskern nach Anspruch 9, umfassend weiterhin mindestens einen Stabilisator, welcher aus der aus Thiodicarbonsäurediestern und gehinderten Phenolen bestehenden Gruppe gewählt ist.

**11.** Optische Faser mit einer Kuststoffumhüllung und einem Silica- oder Glaskern nach Anspruch 10, wobei der Stabilisator Dilaurylthiodipropionat ist.

## Revendications

**1.** Composition de revêtement pour fibre optique à coeur de silice ou de verre revêtu de matière plastique, caractérisée en ce que la composition de revêtement comprend (A) une composition d'acrylate ou d'α-fluoroacrylate monofonctionnel fluoré comprenant un acrylate ou α-fluoroacrylate monofonctionnel hautement fluoré représenté par la formule (I) ci-dessous :

$$CH_2{=}\overset{\overset{\large Y}{|}}{C}{-}COO(CH_2)_{\underline{\ell}}(CF_2)_{\underline{n}}X \qquad (I)$$

dans laquelle Y représente H ou F, X représente H ou F, *l* est un nombre entier allant de 1 à 12 et n est un nombre entier allant de 5 à 12,
et un acrylate ou α-fluoroacrylate monofonctionnel faiblement fluoré représenté par la formule (II) ci-dessous :

$$CH_2=C(Y)-COOCH_2(CF_2)_mX \qquad (II)$$

dans laquelle X et Y sont tels que définis ci-dessus et m est un nombre entier valant de 1 à 3,

en un rapport pondéral de 1/99 à 60/40, (B) un acrylate ou α-fluoroacrylate polyfonctionnel ayant au moins deux radicaux acryloyles ou α-fluoroacryloyles dans la molécule et (C) un photoinducteur.

**2.** Composition de revêtement selon la revendication 1, qui comprend de 50 à 98% en poids de la composition d'acrylate ou α-fluoroacrylate monofonctionnel fluoré, de 1 à 20% en poids de l'acrylate ou α-fluoroacrylate polyfonctionnel (B) et de 0,1 à 10% en poids du photoinducteur (C).

**3.** Composition de revêtement selon la revendication 1 ou 2, dans laquelle la composition d'acrylate ou α-fluoroacrylate monofonctionnel fluoré comprend un acrylate ou α-fluoroacrylate monofonctionnel hautement fluoré de formule (I) où n est un nombre entier valant de 7 à 10 et un acrylate ou α-fluoroacrylate monofonctionnel faiblement fluoré de formule (II) où m vaut 1 ou 2.

**4.** Composition de revêtement selon l'une quelconque des revendications 1 à 3, qui comprend en outre au moins un stabilisateur choisi dans le groupe constitué par les diesters d'acide thiodicarboxylique et les phénols encombrés.

**5.** Composition de revêtement selon l'une quelconque des revendications 1, 2, 3, ou 4, où la composition d'acrylate ou α-fluoroacrylate monofonctionnel fluoré comprend un α-fluoroacrylate monofonctionnel hautement fluoré de formule (I) où n est un nombre entier valant de 7 à 10 et X représente F, et un α-fluoroacrylate monofonctionnel faiblement fluoré de formule (II) où m vaut 1 ou 2 et X représente F.

**6.** Composition de revêtement selon l'une quelconque des revendications 1 à 5, dans laquelle l'acrylate polyfonctionnel est un diacrylate d'alcoylène glycol.

**7.** Composition de revêtement selon la revendication 8, dans laquelle le diacrylate d'alcoylène glycol est le diacrylate d'hexaéthylène glycol.

**8.** Composition de revêtement selon la revendication 4, dans laquelle le stabilisateur est le thiodipropionate de dilauryle.

**9.** Fibre optique à coeur de silice revêtu de matière plastique comprenant un coeur de silice fondue et une composition de revêtement durcie aux rayons ultraviolets, caractérisée en ce que ladite composition de revêtement durcie aux rayons ultraviolets est un produit durci d'une composition de revêtement comprenant (A) une composition d'acrylate ou α-fluoroacrylate monofonctionnel fluoré comprenant un acrylate ou α-fluoroacrylate monofonctionnel hautement fluoré représenté dans la formule (I) ci-dessous :

$$CH_2=C(Y)-COO(CH_2)_l(CF_2)_nX \qquad (I)$$

dans laquelle Y représente H ou F, X représente H ou F, *l* est un nombre entier allant de 1 à 12 et n est un nombre entier allant de 5 à 12,

et un acrylate ou α-fluoroacrylate monofonctionnel faiblement fluoré représenté par la formule (II) ci-dessous :

$$CH_2=C(Y)-COOCH_2(CF_2)_{\underline{m}}X \qquad (II)$$

dans laquelle X et Y sont tels que définis ci-dessus, et m est un nombre entier allant de 1 à 3,

en un rapport pondéral de 1/99 à 60/40, (B) un acrylate ou α-fluoroacrylate polyfonctionnel ayant au moins deux radicaux acryloyles ou α-fluoroacryloyles dans la molécule, et (C) un photoinducteur.

**10.** Fibre optique à coeur de silice ou de verre revêtu de matière plastique selon la revendication 9, qui comprend en outre au moins un stabilisateur choisi dans le groupe constitué par les diesters d'acide thiodicarboxylique et les phénols encombrés.

**11.** Fibre à coeur de silice ou de verre revêtu de matière plastique selon la revendication 10, dans laquelle le stabilisateur est le thiodipropionate de dilauryle.